Europäisches Patentamt

(19) European Patent Office

Office Européen des brevets

(11) Publication number: **0 257 123 B1**

(12) **EUROPEAN PATENT SPECIFICATION**

(45) Date of publication of patent specification:
02.01.91 Bulletin 91/01

(51) Int. Cl.⁵: **B64C 3/38, B64C 13/00**

(21) Application number: 86111669.7

(22) Date of filing: 22.08.86

(54) Active flexible wing aircraft control system.

(43) Date of publication of application:
02.03.88 Bulletin 88/09

(45) Publication of the grant of the patent:
02.01.91 Bulletin 91/01

(84) Designated Contracting States:
DE FR GB IT SE

(56) References cited:
GB-A- 16 890
US-A- 4 330 100
US-A- 4 562 546

(73) Proprietor: ROCKWELL INTERNATIONAL
CORPORATION
2230 East Imperial Highway
El Segundo California 90245 (US)

(72) Inventor: Tulinius, Jan
6111 Wintergreen Drive
Huntington Beach, CA 92647 (US)

(74) Representative: Wagner, Karl H. et al
WAGNER & GEYER Patentanwälte
Gewürzmühlstrasse 5 Postfach 246
D-8000 München 22 (DE)

## Description

### BACKGROUND OF THE INVENTION

#### a. Field of the Invention

This invention relates to control of an aircraft, and more specifically to control of an aircraft by deflecting the wings through controlled movements of wing control surfaces.

#### b. Description of the Prior Art

The control of high speed aircraft has been a major problem for aircraft designers. Aircraft with highly aft swept wings have poor control effectiveness, especially roll control, in the high dynamic pressure region. The difficulty of control of high speed aft swept wing aircraft in roll results from aeroelastic twist caused by trailing edge control surface deflections. Normally, wing control surfaces when differentially deflected create differential lift on the wing panels which results in a rolling moment. However, as a wing is flexible, the increase in differential lift caused by the trailing edge control surface deflections will also cause each wing to twist in a direction to reduce the differential lift. At high dynamic pressure flight conditions, the twisting due to aeroelastic effects is large. As a result, roll control surfaces must be deflected to a large degree to obtain the desired roll, thereby increasing actuation requirements which adds to aircraft weight and power system requirements. At a certain point, the effect can result in roll reversal or what is commonly known as aileron reversal. (The aircraft will actually roll in the opposite direction from the pilot's commands.) To maintain roll control effectiveness, the wings are traditionally stiffened and a rolling tail utilized. The addition of a rolling tail and increasing stiffness of the wings results in a heavier aircraft, reduced aerodynamic performance, and increased observables.

In U.S. Patent No. 821, 393 to O. and W. Wright issued May 2, 1906, there is disclosed a maze of ropes and pulleys to twist the bi-plane wings to provide lateral stability. The wings being made from wood and covered with cloth were sufficiently flexible to allow for the desired twist. The pilot was positioned in a movable cradle to which the ropes were attached. Thus, the pilot by his lateral movement could cause rope movement and resulting wing twist. The Wright Brothers' object was to keep the wings level and control the lateral upset initiated by wind gusts. This practice has been made obselete by the current practice of aircraft control forces effected by control surface deflections with wing flexure minimized.

Another problem with high speed aircraft, is the necessity for making design compromises in the wings for effectiveness over the flight envelope.

Aerodynamic requirements for different flight conditions vary. For example, optimal wing configuration for transonic maneuver and supersonic cruise are considerably different. Since current aircraft wings must normally be stiffened to provide roll control effectiveness, there is little that can be done to resolve this problem by variable aeroelastic twist. Mechanical devices to vary leading and trailing edge camber have been used in this regard, but only produce an inefficient compromise since the balance of the wing remains unaffected and aircraft weight, cost, and complexity are increased. The prior art document US-A4 562 546 discloses a system for activly controlling an aircraft as said forth in the first part of claim 1.

### SUMMARY OF THE INVENTION

It is, therefore, an object of the present invention to provide a system for controlling an aircraft through aeroelastic deflections of the aircraft wings.

It is another object of this invention to provide a system that will minimize aircraft drag during cruise and maneuver.

It is another object of this invention to provide an aircraft control system that will yield improved control effectiveness during high dynamic pressure conditions and beyond control surface reversal.

It is still another object of this invention to provide an aircraft control system that will result in reduced weight, drag, and observables for the aircraft.

It is still another object of this invention to provide an aircraft control system which will automatically compensate for a damaged control surface.

It is yet another object of this invention to provide an aircraft control system which will vary the configuration of the aircraft wings by aeroelastically deflecting same into one which is desirable for the flight conditions.

Briefly, in accordance with this invention, there was provided a system and a method for activly controlling an aircraft having flexible wings as said forth in the preamble in claim 1 or 26, respectivelly. Such a system and method, respectivelly, is characterized by the features of the characterizing clause of claim 1 and claim 26. Preferred embodiments of the invention are claimed in the dependent claims.

In accordance with the invention movements of the leading edge and trailing edge wing control surfaces bring about the aeroelastic deflections of the flexible wings for control of the aircraft, optimum cruise, and specific maneuvers. The system can also effect gust load alleviation, flutter suppression, and maneuver load control. The system is responsive to pilot control signals and signals from sensors respresentative of selected aircraft flight parameters. A processing means responsive to the command and sensor signals provides control signals to actuators that move the leading and trailing edge control surfaces in a manner to cause selected aeroelastic deflections of the wings so that each of the wings has an overall contour which will produce the specific aircraft control desired. The system preferably incorporates an adaptive capability in the processing means that will compensate for a failure of a control surface. For example, if a control surface becomes disabled, the remaining control surfaces would immediately adapt to the loss and effect the desired aeroelastic wing deflections to maintain control of the aircraft with minimum drag.

Other objects and advantages of the invention will become apparent upon reading the following detailed description and upon reference to the drawings.

## BRIEF DESCRIPTION OF THE DRAWINGS

FIGURE 1 is a plan view of an aircraft according to the present invention with active flexible adaptive wings ;
FIGURE 2 is a front view of the aircraft of FIGURE 1 ;
FIGURE 3 is a block diagram of a control system according to the present invention ;
FIGURE 4 is a graph of selected control surface deflections vs. dynamic pressure to maintain a selected roll rate with minimum drag under specified conditions for the aircraft of Figure 1 ;
FIGURE 5 is a plan view of another embodiment according to the present invention of an aircraft with active flexible adaptive wings ;
FIGURE 6 is a front view of the aircraft of Figure 5 ;
FIGURE 7 is a plan view of the aircraft of Figure 1 showing placement of various sensors ; and
FIGURE 8 is a block diagram of a control system which incorporates gust load alleviation stability augmentation, flutter suppression, and maneuver load control.

While the invention will be described in connection with the preferred embodiments, it will be understood that it is not intended to limit the invention to those embodiments. On the contrary, it is intended to cover all alternatives, modifications, and equivalents that may be included within the scope of the invention as described by the appended claims.

## DETAILED DESCRIPTION OF THE INVENTION

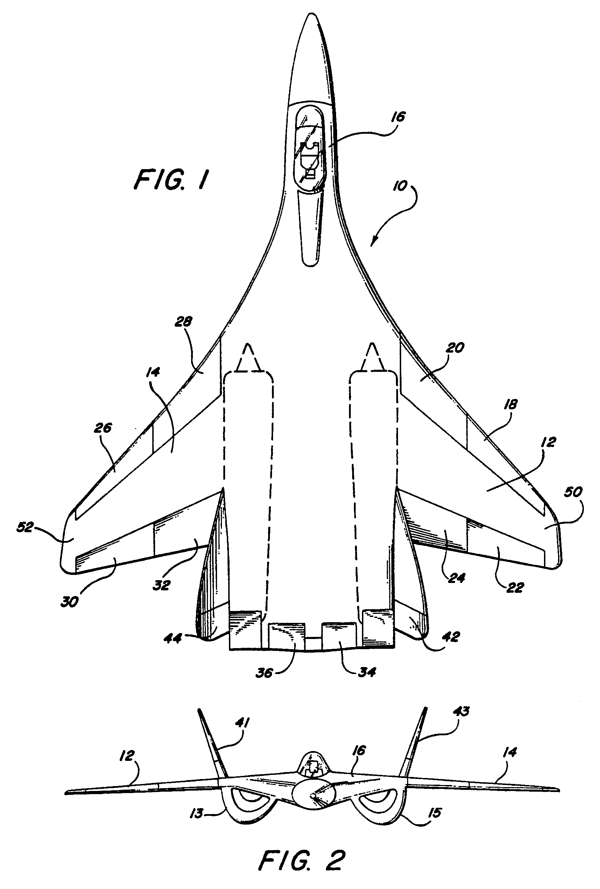

Referring now to Figures 1 and 2, there is shown an aircraft generally indicated at 10 having wings 12 and 14 and fuselage 16. Mounted on the fuselage are engine inlets 13 and 15. Wing 12 on the right or starboard side employs leading edge wing control surfaces 18 and 20 and trailing edge wing control surfaces 22 and 24. Wing 14 on the left or port side employs leading edge wing control surfaces 26 and 28 and trailing edge wing control surfaces 30 and 32.

Also shown in FIGURE 1 are body control surfaces 34 and 36 that primarily provide pitch control, and vertical tail control surfaces 42 and 44 that provide yaw control. The yaw control surfaces are conventional in this embodiment. The control surfaces are mechanically movable in a conventional manner. However, each is able to deflect above and below the corresponding wing.

It should be noted that the aircraft 10 does not include a horizontal tail. This is unnecessary with the present invention, thereby saving considerable weight and reducing aircraft observables. The tail structures 41 and 43 are shown as being somewhat inclined relative to the aircraft vertical axis, however, they are much closer to vertical than to horizontal and their primary function is as a vertical tail for yaw control, and not as a horizontal tail. Accordingly, by no horizontal tail is meant no tail structures which are substantially horizontal relative to the fuselage which have a primary purpose of acting as a horizontal tail.

While it is preferred that the aircraft 10 not have a horizontal tail, this is not a requirement. The system would still provide many of the advantages discussed herein for an aircraft having horizontal tails. Similarly, aircraft 10 does not employ canards. However, the present invention could advantageously be used whether or not the aircraft has such surfaces.

All aircraft wings are flexible to a certain degree. There must, however, be sufficient stiffness and strength in the wings, even with an active control, to withstand design loads, maneuver loads, gusts, and to prevent flutter. Composite materials have seen recent application for wings due to their high strength to weight ratio and capability for aeroelastic tailoring. It is for these reasons that in the preferred embodiment, the wings 12 and 14 of the present invention will be made of a composite material, such as graphite epoxy. However, other materials could be used if desired. Optimally the wing material used will provide a high degree of wing flexibility with sufficient strength and stiffness with active controls to meet the aforementioned design requirements.

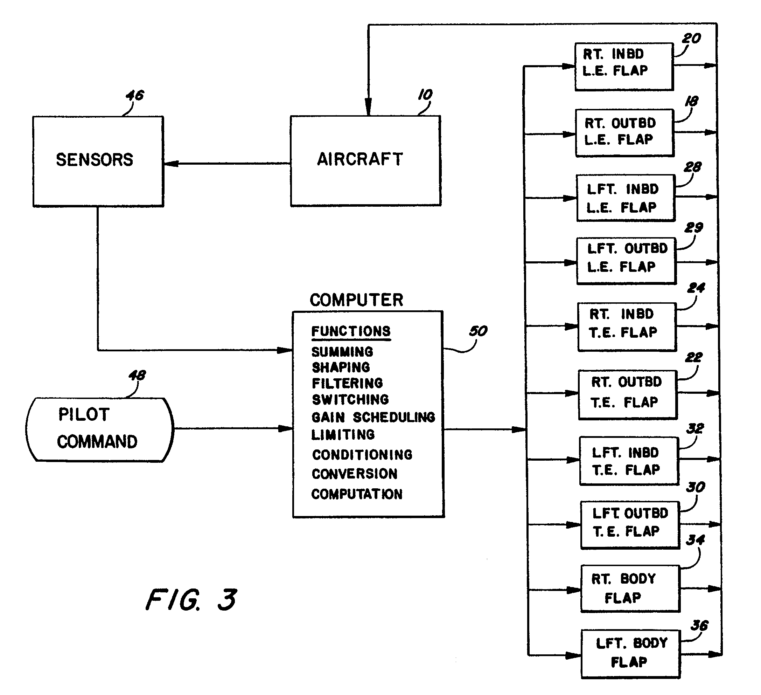

Referring now to Figure 3 there is shown a block diagram of a control system according to the present invention. When the pilot desires that the aircraft execute a particular control movement, a command signal 48 is generated (such as by stick movement) which is transmitted to computer 50. The command may be manual from the pilot or by automatic pilot. Computer 50 also receives signals from sensors 46, which are positioned on aircraft 10. Sensors 46 provide signals indicative of motion of the aircraft. A number of parameters will be sensed in this regard. These will preferably include aircraft attitude, fuselage motion (accelerometer readings), altitude, and mach number. With gain scheduling for the particular aircraft included in the computer memory, the command signal and sensor signals, after suitable shaping, filtering, switching, conditioning, converting, surface command limiting, and combining are computed to determine optimal flap movements to cause the aeroelastic wing flexure which would result in the desired control movement. Control signals from computer 50 are subsequently transmitted to actuators (not shown) for each of the respective flaps 18, 20, 22, 24, 28, 29, 30, 32, 34, and 36 which is to be rotated from its current position. Movement of these flaps produces aerodynamic loads on the wings 12 and 14 which cause the wings to deflect so that each of the wings 12 and 14 has an overall contour (in combination with the control surfaces thereon) that will produce the desired control movement. The control surface deflections are computed in computer 50 such that the optimum wing shape for wings 12 and 14 for minimum drag for the given flight condition are obtained to provide the desired control movement. It should be understood that the control surfaces are not used as the primary force producing devices, but as aerodynamic surfaces to control the aeroelastic deformation of the wings. It is the overall deflected contour of the wings that produces the desired control movement.

The control system can also be used for providing active longitudinal stability augmentation to the aircraft 10, which is particularly advantageous when there is no horizontal tail. This is accomplished in the same manner as described above with the exception that the computer 50 computes its control signals to maintain stability based only upon the signals from sensors 46. However, when stability and flight control are required simultaneously, computer 50 would process all input signals to arrive at control signals which most efficiently accomplish both functions. Thus, the computer 50 can transmit control signals to the actuators for the control surfaces to produce (with minimum drag) under the current flight conditions a wing contour that provides aircraft longitudinal stability and/or a desired flight control movement. Tail control surfaces 42 and 44 would preferably be used for providing lateral-directional stability to aircraft 10.

As an alternate to gain scheduling in the computer 50, or in addition to such gain scheduling, a self adaptive concept can be used. This approach employs incremental movement of selected control surfaces with the resulting aircraft movement monitored and fed back to the computer 50. Based upon these feedback signals, the computer 50 will continually recalculate the optimal positions for the various control surfaces to cause the wing deflection which will result in the desired aircraft control. This could be combined with gain scheduling which would be used for initial positioning of the control surfaces.

The self adaptive concept also allows the system to compensate for a damaged or inoperative control surface. Since such a control surface would not bring about the expected control effect, the computer would search for a combination of control surface movements that does. Conversely, the loss of a control surface, such as an aileron, on a conventional aircraft, will normally severely impact aircraft control.

With the ability to compensate for a damaged or inoperative control surface, the present invention results in another advantage, namely that less control redundancy is required. This would allow additional reductions in weight, complexity, and costs.

Referring again to Figures 1 and 2, if the pilot generates a roll command which is intended to cause a certain roll rate, computer 50 will transmit control signals to the various wing flaps (and optionally to the body flaps) to cause the aeroelastic contour of wings 12 and 14 in combination with the wing control surfaces to be such as to result in the desired movement, e.g., by increasing the angle of incidence of wing 14 relative to wing 12. This control technique will be unaffected by aileron reversal. In this regard, the present invention takes advantage of wing flexibility rather than opposing it. The control surfaces are used to twist each wing to obtain the desired wing contours to effect a desired control as opposed to being the primary control surfaces which must overcome opposing aeroelastic wing twist to effect the desired movement. This allows for a lighter weight wing (since less stiffness is required) and the elimination of a rolling tail which also saves wieght and reduces aircraft observables.

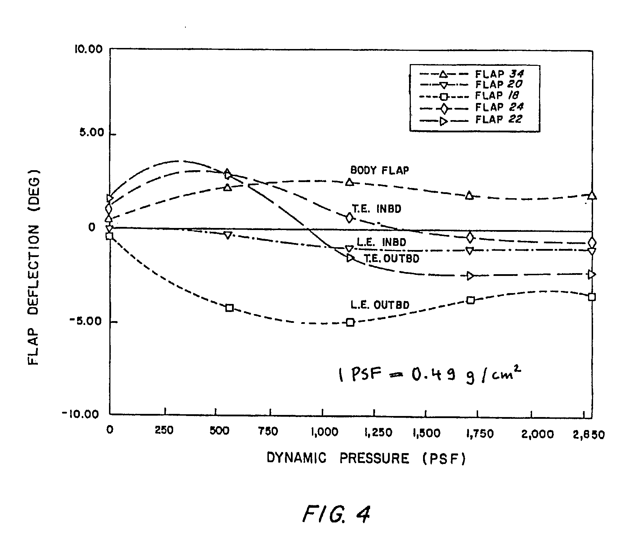

Figure 4 presents a graphic illustration in a particular design case for wing 12 for a sixty-six degree per second roll rate at various dynamic pressures. The control surface deflections were derived based upon achieving the desired roll rate for minimum drag. It should be noted that the trailing edge control surface deflections reverse direction as dynamic pressure increases. The control surfaces are being used beyond conventional aileron reversal. Also it should be noted that the maximum deflection of any control surface is never more than 5 degrees. Typical trailing edge control surface deflection on a conventional "stiff" wing design would be in a range 30 to 40 degrees to maintain the same roll rate. Thus, the present invention will result in a much lower drag during a maneuver than a conventional design. Also, due to the smaller control surface deflections required, the surface hinge movements will be reduced, resulting in smaller, lighter, and lower power actuators.

Pitch control for aircraft 10 can be accomplished by flaps 34 and 36, or by wings 12 and 14, or by a combination of the body flaps and wings 12 and 14. When wings 12 and 14 are used for pitch control, the wing control surfaces (and optionally flaps 34 and 36) are positioned to cause deflections of the wings 12 and 14 which will bring about the desired pitch. Wing deflections to cause the desired pitch movement are optimally based upon the minimum drag configuration.

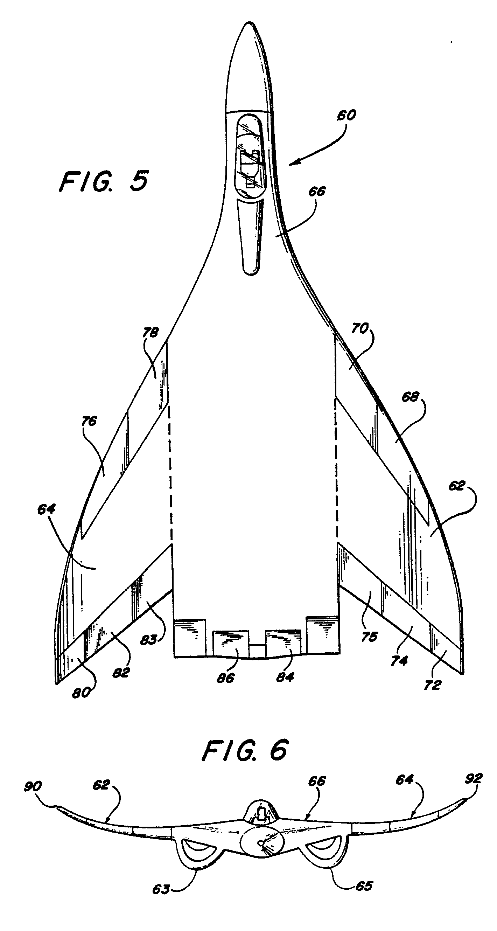

The present invention can also be used to provide yaw control, whereby overall control for the aircraft is possible. This is illustrated in the embodiment shown in Figures 5 and 6. An aircraft generally indicated at 60 has wings 62 and 64 and a fuselage 66. Mounted on the fuselage are engine inlets 63 and 65. Wing 62 employs leading edge wing control surfaces 68 and 70 and trailing edge wing control surfaces 72, 74, and 75. Wing 64 employs leading edge wing control surfaces 76 and 78 and trailing edge wing control surfaces 80, 82, and 83. Optional body control surfaces 84 and 86 that primarily provide pitch control are also illustrated. The control surfaces are all movable in conventional manner. However, as with aircraft 10, the wing control surfaces are able to deflect above and below the corresponding wing. Also like aircraft 10, aircraft 60 does not include a horizontal tail. Further, aircraft 60 does not include a vertical tail. This again saves overall aircraft weight and reduces aircraft observables.

Yaw control for aircraft 60 is provided by the wings 62 and 64. In this regard, it should be noted that wings 62 and 64 are permanently bent up in a cresent shape (a span-wise camber). Wings 62 and 64 are still flexible according to the present invention, but would generally maintain the cresent shape whatever the deflections. Wings 62 and 64 could alternately be permantly bent downward in a cresent shape. The cresent shape allows the wings 62 and 64, particularly at the wing tips 90 and 92 respectively, to have a vertical component to effect yaw control. Thus, wings 62 and 64 can be aeroelastically deflected utilizing the wing control surfaces (and optionally the body control surfaces 84 and 86) as in the embodiment of Figures 1-3, for roll and pitch control, longitudinal stability, and to effect yaw control, e.g., by differentially deflecting wing tips 90 and 92. In this embodiment, wings 62 and 64 would also similarly be used to provide active lateral-directional stability augmentation for aircraft 60.

A significant advantage of the present invention is the ability to configure the aircraft wings for substantially optimum performance under different flight conditions. Thus, optimal wing contour for transonic maneuver, supersonic cruise, landing and takeoff, and high speed acceleration vary substantially. The present invention is able to address this problem by significantly varying the shape of wings 12 and 14 as desired based upon pilot or computer control and sensor signals. In this regard, the wings 12 and 14 can be aeroelastically tailored for increased wing flexibility since extra stiffness in the wings mandated by conventional high speed aircraft designs is obviated. As such, there is far more freedom with the current invention to vary wing configuration as desired for the particular flight condition.

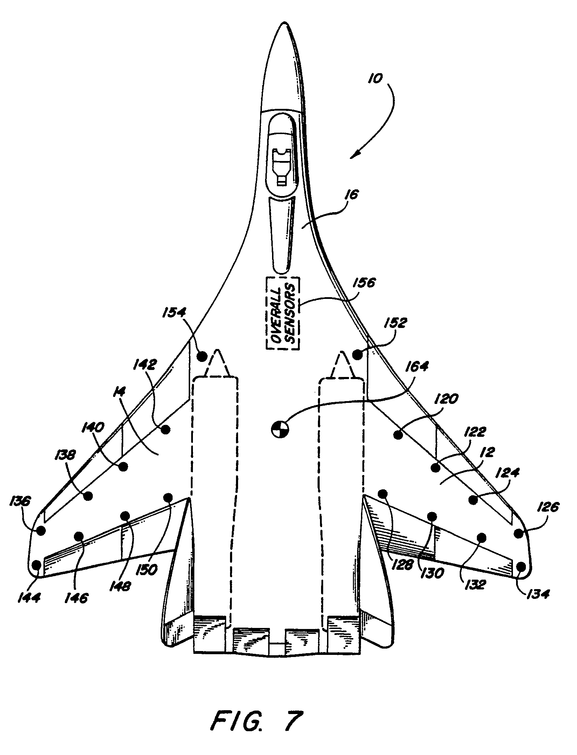

Referring now to Figure 7, there is shown a view of the aircraft 10 of Figure 1 which illustrates an example of the placement of various sensors. While aircraft 10 is illustrated, the approach would also apply to aircraft 60. Sensors 120, 122, 124, and 126 are located near the leading edge of wing 12. Sensors 128, 130, 132, and 134 are located near the trailing edge of wing 12. Sensors 136, 138, 140, and 142 are located near the leading edge of wing 14 and sensors 144, 146, 148, and 150 are located near the trailing edge of wing 14. The sensors on wings 12 and 14 measure motion of the respective portions of the wings where they are located. The wing sensors are preferably linear accelerometers which are positioned to measure vertical acceleration. Aircraft 10 also employs fuselage sensors 152 and 154 which are positioned on the right and left sides of the fuselage respectively. Sensors 152 and 154, which are also preferably linear accelerometers, are spaced equidistant from the fuselage center line and measure vertical fuselage acceleration so that loads on the wings 12 and 14 can be isolated (from fuselage movement and for asymmetric conditions).

A plurality of other sensors designated 156 are also provided on the aircraft to measure roll, pitch, and yaw movement of the aircraft, lateral movement of the fuselage, mach number, and altitude. The nominal c.g. 164 for the aircraft is also illustrated. The term "nominal" is used since during flight, the aircraft actual center of gravity will shift, i.e., due to fuel usage. Accordingly what is meant by "nominal" is the average location of the center of gravity during flight.

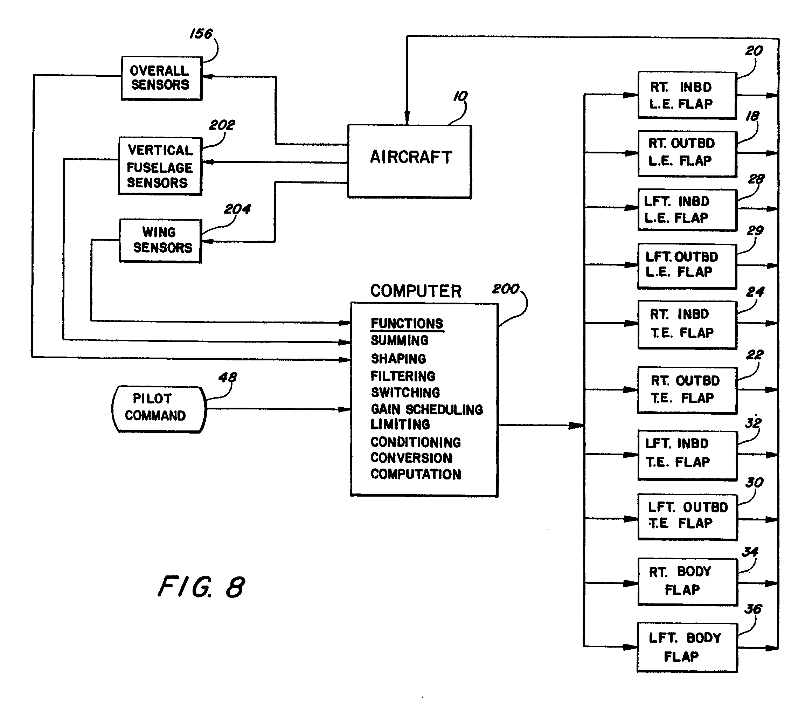

Figure 8 illustrates a block diagram of an enhanced control system for aircraft 10 which incorporates the ability to compensate for maneuver load control, gust load alleviation, and flutter supression. Such a system allows for further reductions in wing weight and stiffness. Computer 200 receives pilot command signals 48 (when transmitted by the pilot or an automatic pilot) and signals from the overall sensors 156, vertical fuselage sensors 202, and wings sensors 204. Vertical fuselage sensors 202 encompass sensors 152 and 154 illustrated in Figure 7, while wing sensors 204 encompass sensors 120, 122, 124, 126, 128, 130, 132, 134, 136, 138, 140, 142, 144, 146, 148, and 150, also illustrated in Figure 7.

When no maneuver load control, gust load alleviation, or flutter supression is required, computer 200 will in response to sensors 156 and pilot command signal 48 perform the functions listed to compute optimal flap movements to cause the wing flexure which will maintain stability, produce desired control movements, and bring about optimum wing configuration for the particular flight conditions, e.g., supersonic cruise. Control signals from computer 200 are subsequently transmitted to acutators (not shown) for each of the respective flaps 18, 20, 22, 24, 28, 29, 30, 32, 34, and 36 which is to be rotated from its current position. As previously discussed, movement of these flaps produces aerodynamic loads on the wings 12 and 14 which cause the wings to deflect so that each of the wings 12 and 14 has an overall contour that will produce the desired control movement (or stability augmentation) and optimum wing configuration for the flight conditions. Gain scheduling by computer 200 is preferably based upon providing optimum wing shape for the wings 12 and 14 for minimum drag for the given flight conditions (and to effectuate any stability augmentation and desired control movements).

When maneuver load control, gust load alleviation, or flutter suppression is necessary as determined by computer 200 based upon the signals from sensors 202 and 204, such as where wing 12 and/or wing 14 have been deflected due to flutter, gusts, and or maneuver loads, the computer 200 also processes such signals in combination with the signals from overall sensors 156 and any pilot command signal 48 to compute movements for the flaps. Thus, computed flap movements to effect stability augmentation and/or a desired control movement would be combined with computed flap movements necessary to compensate for maneuver load control, gust alleviation, or flutter suppression. If no control movement or stability augmentation is required at a given time when flutter suppression, maneuver load control, or gust alleviation is required, then the flaps will be moved by computer 200 solely to offset the detected maneuver loads, gusts, or flutter.

A self adaptive concept as discussed whith reference to Figure 3 may alternately or preferably be used in combination with gain scheduling for computer 200. For desired control movements or optimum configuration for a given flight condition, the computer 200 would use feedback of resulting aircraft movement. For gusts, flutter, and maneuver loads, computer 200 would use feedback from the wing sensors to determine impact of the flap movements.

Thus, it is apparent that there has been provided, in accordance with the invention, an Aircraft Control System that fully satisfies the objectives, aims, and advantages set forth above. While the invention has been described in conjuction with specific embodiments thereof, it is evident that many alternatives, modifications, and variations will be apparent to those skilled in the art in light of the foregoing description. Accordingly, it is intended to embrace all such alternatives, modifications, and variations that fall within the scope of the appended claims.

The invention involves using control surface movements in a manner to cause the wings to aeroelastically deflect into a desired overall contour to control the aircraft. Others in the prior art have also varied wing shape to obtain control, e.g., as disclosed in the Wright Brothers patent mentioned in the specification, U.S. Patent 3,310,261, and U.S. Patent 3,813,062. Unlike these prior art patents (as discussed in detail subsequently), the present invention accomplishes the bending and twisting of the wings aeroelastically by control surface movements as opposed to mechanical means. It should be appreciated, in view of these prior art patents and the present specification, that the desired aircraft control can be effected by deflecting the wings into a particular contour. See also U.S. Patent 4,330,100 wherein it is disclosed that wings are subjected to bending deformation and twist deformation as aerodynamic loads on the wings vary. As such, it should be clearly understood from the specification and claims that the desired aircraft control can be obtained by deflecting the wings into a contour which will bring about the desired aircraft control and that the wings are deflected aeroelastically (by aerodynamic loads) into the desired contour by selective movements of the wing control surfaces. As was pointed out above, movement of these flaps produces aerodynamic loads on the wings 12 and 14 which cause the wings to deflect so that each of the wings 12 and 14 has an overall contour (in combination with the control surfaces thereon) that will produce the desired control movement. Also, as mentioned above, it should be understood that the control surfaces are not used as the primary force producing devices but as aerodynamic surfaces to control the aeroelastic deformation of the wings. It is the overall deflected contour of the wings that produces the desired control movement.

Pitch, roll, and yaw are controlled in accordance with the above, i.e. the wings of the aircraft are deflected into specific contours that will bring about the desired control, be it a pitch, roll, and/or yaw movement. It is well known in the art that such control movements are obtained by creating moments on the aircraft to bring about the desired control movement. See also the U.S. Patents mentioned previously which obtain control movements by selectively deflecting the aircraft wings. See also in the above specification the sample discussion relative to roll :

". . . if the pilot generates a roll command which is intended to cause a certain roll rate, computer 50 will transmit control signals to the various wing flaps (and optionally to the body flaps) to cause the aerolastic contour of the wings 12 and 14 in combination with the wing control surfaces to be such as to result in the desired movement, e.g., by increasing the angle of instance of wing 14 relative to wing 12."

Above it is further stated as an example that yaw control could be obtained by differentially deflecting wing tips 90 and 92, and it should be clearly understood that the wings can be deflected into an overall contour to effect desired control movements. It should also be understood that longitudinal stability of the aircraft can be obtained since this involves deflecting the wings into a contour to create a necessary pitch moment.

The system of the invention is operative under conditions of roll reversal. Roll reversal occurs when in a conventionally controlled aircraft, the aircraft rolls in the opposite direction from the pilot commands, i.e., the conditions are such that the movement of the primary controll surfaces (ailerons) is overcome by the opposing aeroelastic wing twist. Under these conditions, the airplane, as controlled conventionally, would undergo roll reversal. However, with the present system, this situation does not occur since the control surfaces are used to induce wing twist which will result in the desired roll movement, i.e., wing twist is used to obtain the desired control as opposed to being compensated for and overcome by the meovement of the control surfaces. As noted above, this results in substantially smaller control surface deflections, which results in lower drag during maneuvers and lower poser actuation requirements. Further, a lighter weight wing can be used since less wing stiffness is required and a rolling tail eliminated.

Flutter, gusts, and maneuver loads are detected as is conventional in the prior art with sensing devices such as sensors 202 and 204. Such are suppressed, alleviated, and controlled by flap movements as determined by the computer.

Regarding the operation of the computer to process signals in order to cause stability of the aircraft, it should be understood that the invention is not the computer or a formula used by the computer to generate control signals to operate the flight control surfaces. Rather, the invention as claimed is to move the control surfaces on the wings in a manner to cause each of the wings to aeroelastically deflect into a desired overall contour to control the aircraft. The movements of the control surfaces to effect the particular wing contours and resulting aircraft control are calculated based upon flight conditions, i.e., sensed signals indicative of the motion of the aircraft. This is done by a conventional processor which would send signals to actuators (control means) representative of the desired control surface movements to aeroelastically effect the desired wing deflections. Deriving the algorithms for such a computer for a particular aircraft is clearly within the purview of one skilled in the art, i.e., under specified flight conditions with a desired control movement for a particular aircraft having known design characteristics, e.g., wing stiffness, the force that would be created on a wing and the resulting deflection by virtue of specific movements of particular control surfaces under the given flight conditions can be obtained. See also U.S. Patents 4,562,546 and 4,569,493 wherein there are made similar disclosures of conventional processing means.

## Claims

1. A system for actively controlling an aircraft having flexible wings, flight control surfaces mounted on said flexible wings, aircraft sensors for providing signals indicative of the motion of the aircraft, processing means responsive to said signals from said aircraft sensors to generate control signals, and control means receiving said control signals from said processing means for moving said control surfaces in accordance with said control signals in a manner to control the aircraft characterized by :
said processing means generating control signals for movement of said control surfaces which will aeroelastically effect desired wing deflections, and said control surfaces means moving said control surfaces such that said control surfaces aeroelastically effect wing deflections to obtain desired overall contours for each of said wings to effect desired control of the aircraft.

2. The system of Claim 1, also including command means generating signals for aircraft flight control, and wherein said processing means is responsive to said signals from said command means.

3. The system of Claim 1 or 2, wherein said control means moves said control surfaces to cause each of said wings to aeroelastically deflect into a desired overall contour to maintain stability of the aircraft.

4. The system of Claim 1, wherein the leading and trailing edges of said wings have at least one of said flight control surfaces mounted thereon.

5. The system of Claim 4, wherein said flight control surfaces are mounted to allow for their deflection above and below the wing to which they are mounted.

6. The system of Claim 2, wherein the system is operative under conditions of conventional aileron reversal.

7. The system of Claim 6, wherein the leading and trailing edges of said wings have at least one of said flight control surfaces mounted thereon, and said flight control surfaces are mounted to allow for their deflection above and below the wing to which they are mounted.

8. The system anyone of claims 1-7, wherein the aircraft is without a horizontal tail.

9. The system of claim 7, wherein the aircraft is without a horizontal tail and said control means moves said control surfaces to cause said flexible wings to aeroelastically deflect to effect roll control of the aircraft.

10. The system of claim 1 or 7, wherein said control signals are such that said control means moves said control surfaces to cause said wings to aeroelastically deflect such that the desired aircraft control is effected with substantially minimum drag.

11. The system of Claim 1, wherein said wings are made of a composite material and are substantially aeroelastically tailored to enhance their ability to deflect into different configurations which may be desirable from the standpoint of aircraft performance over the flight regime of the aircraft.

12. The system of claim 1 or 9, wherein said control means is also for moving said control surfaces in a manner to cause said wings to be aeroelastically deflected into a configuration substantially optimized for the flight conditions.

13. The system of claim 10, wherein said aircraft has a fuselage, said fuselage is mounted to said wings, and also including fuselage flight control surfaces, and a second control means, said fuselage flight control surfaces mounted to the aircraft fuselage, said processing means also generates second control signals, said second control means being responsive to said second control signals for moving said fuselage flight control surfaces, said fuselage flight control surfaces working in combination with said wings to control said aircraft, said second control signals being such that in combination with said first control signals control of said aircraft is effected with substantially minimum drag.

14. The system of Claim 7 or 10, wherein the system is for providing roll control to the aircraft said command means generates signals for aircraft roll control, and said control means moves said control surfaces to cause each of said flexible wings to aeroelastically deflect into a desired overall contour to effect roll control of the aircraft.

15. The system of Claim 7 or 10, wherein the system is for providing roll and pitch control to the aircraft, said command means generates signals for aircraft roll and pitch control, and said control means moves said control surfaces to cause each of said flexible wings to aeroelastically deflect into a desired overall contour to effect roll and pitch control of said aircraft.

16 . The system of Claim 7 or 10, wherein said command means generates signals for aircraft roll, pitch, and yaw control, and wherein said control means moves said control surfaces to cause each of said flexible wings to aeroelastically deflect into a desired overall contour to effect roll, pitch, and yaw control of said aircraft.

17. The system of Claim 10 wherein said aircraft sensors sense mach number, aircraft attitude, and altitude.

18. The system of Claim 10, also including wing sensors for providing signals indicative of motion of said wings, and wherein said processing means is also responsive to said signals from said wing sensors.

19. The system of Claim 18, wherein said control means also moves said control surfaces to cause said flexible wings to aeroelastically deflect in a desired manner to provide gust load alleviation.

20. The system of Claim 18, wherein said control means also moves said control surfaces to cause said flexible wings to aeroelastically deflect in a desired manner to provide flutter supression.

21. The system of Claim 18, wherein said control means also moves said control surfaces to cause said flexible wings to aeroelastically deflect in a desired manner to provide gust load alleviation and flutter supression.

22. The system of Claim 18, wherein said control means also moves said control surfaces to cause said flexible wings to aeroelastically deflect in a desired manner to provide manuver load control.

23. The system of Claim 18, wherein said control means also moves said control surfaces to cause said flexible wings aeroelastically to deflect in a desired manner to provide gust load allevation,flutter suppression, and manuver load control

24. The system of claim 1 or 2, wherein said processing means compensates for damaged or inoperative control surfaces which fail to cause the wings to deflect in a desired manner.

25. The system of claim 7 or 8 or 9, wherein the aircraft is without a vertical tail.

26. A method for actively controlling an aircraft having flexible wings and flight control surfaces mounted on the flexible wings, which comprises sensing motion of the aircraft and moving the control surfaces on said wings in response to the sensed motion of the aircraft to control the aircraft characterized by : moving the control surfaces of the aircraft such that said control surfaces aeroelastically effect wing deflections to obtain desired overall contours for each of said wings to effect desired control of the aircraft.

27. The method of claim 26, wherein said moving the control surfaces is in a manner to aeroelastically deflect the wings to effect the desired aircraft control with substantially minimum drag.

28. The method of claim 27, also including generating command signals for aircraft flight control, and wherein said moving of the control surfaces is also in response to said command signals.

## Ansprüche

1. System zum aktiven Steuern eines Flugzeugs mit flexiblen Flügeln, Flugsteueroberflächen angeordnet an den flexiblen Flügeln Flugzeugfühlern zum Vorsehen von Signalen welche die Bewegung des Flugzeuges anzeigen, Verarbeitungsmittel welche auf die Signale von den Flugzeugfühlern ansprechen, um Steuersignale zu erzeugen, und Steuermittel zum Empfang der Steuersignale von den Verarbeitungsmitteln zur Bewegung der Steueroberflächen entsprechend den Steuersignalen in einer das Flugzeug steuernden Art und Weise, dadurch gekennzeichnet, daß die Verarbeitungsmittel Steuersignale erzeugen für die Bewegung der Steueroberflächen, welche aeroelastisch die gewünschten Flügelauslenkungen bewirken, und daß die Steuermittel die Steueroberflächen derart bewegen daß die Steueroberflächen Flügelauslenkungen aeroelastisch bewirken, um die gewünschten Gesamtkonturen für jeden der Flügel zu erhalten um die gewünschte Steuerung des Flugzeugs zu bewirken.

2. System nach Anspruch 1 mit Befehlsmitteln zur Erzeugung von Signalen für die Flugzeugflugsteuerung und wobei die Verarbeitungsmittel auf die Signale von den Befehlsmitteln ansprechen.

3. System nach Anspruch 1 oder 2, wobei die Steuermittel die Steueroberflächen bewegen, um zu bewirken, daß jeder der Flügel sich aeroelastisch in eine gewünschte Gesamtkontur auslenkt, um die Stabilität des Flugzeugs beizubehalten.

4. System nach Anspruch 1, wobei die vorderen und hinteren Kanten der Flügel mindestens eine der erwähnten Flugsteueroberflächen daran angeordnet aufweisen.

5. System nach Anspruch 4, wobei die Flugsteueroberflächen derart angeordnet sind, daß ihre Auslenkung oberhalb und unteralb des Flügels, an dem sie angeordnet sind, gestattet ist.

6. System nach Anspruch 2, wobei das System unter den Bedingungen der konventionellen Querruderumkehr operativ ist.

7. System nach Anspruch 6, wobei die vorderen und hinteren kanten der Flügel mindestens eine der erwähnten Flugsteueroberflächen daran angeordnet aufweisen, und wobei ferner die erwähnten Flugsteueroberflächen derart angeordnet sind, daß ihre Auslenkung oberhalb und unterhalb des Flügels, an dem sie angeordnet sind, gestattet ist.

8. System nach einem der Ansprüche 1 - 7, wobei das Flugzeug ohne einen horizontalen Schwanz ausgebildet ist.

9. System nach Anspruch 7, wobei das Flugzeug ohne einen horizontalen Schwanz ausgebildet ist, und wobei die erwähnten Steuermittel die erwähnten Steueroberflächen bewegen, um zu bewirken, daß sich die flexiblen Flügel aeroelastisch auslenken um die Quersteuerung des Flugzeugs zu bewirken.

10. System nach Anspruch 1 oder 7, wobei die Steuersignale derart vorgesehen sind, daß die Steuermittel die Steueroberflächen bewegen, um zu bewirken, daß die Flügel sich aeroelastisch derart auslenken, daß die gewünschte Flugzeugsteuerung mit im wesentlichen minimalen Strömungswiderstand (drag) bewirkt wird.

11. System nach Anspruch 1, wobei die Flügel aus einem Faserverbundwerkstoff (Composite-Material) hergestellt sind und im wesentlichen aeroelastisch zugeschnitten sind, um ihre Fähigkeit zu erhöhen, in unterschiedlichen konfigurationen sich auszulenken, die vom Standpunkt der Flugzeugleistungsfähigkeit gegenüber dem Flugregime des Flugzeugs erwünscht sein können.

12. System nach Anspruch 1 oder 9, wobei die Steuermittel auch dazu dienen, um die Steueroberflächen in einer Art und Weise zu bewegen, daß die Flügel aeroelastisch in eine Konfiguration ausgelenkt werden, die im wesentlichen durch die Flugbedingungen optimiert ist.

13. System nach Anspruch 10, wobei das Flugzeug einen Rumpf besitzt der an den Flügeln angeordnet ist und ferner mit Rumpfflugsteueroberflächen und zweiter Steuermitteln, wobei die Rumpfflugsteueroberflächen an dem Flugzeugrumpf angeordnet sind und die Verarbeitungsmittel auch zweite Steuersignale erzeugen, wobei die zweiten Steuermittel auf die zweiten Steuersignale ansprechen, um die Rumpfflugsteueroberflächen zu bewegen, und wobei ferner die Rumpfflugsteueroberflächen in Kombination mit den Flügeln arbeiten, um das Flugzeug zu steuern, und wobei schließlich die zweiten Steuersignale derart vorgesehen sind, daß sie in Kombination mit den ersten Steuersignalen die Steuerung des Flugzeuges mit im wesentlichen minimalen Strömungswiderstand bewirken.

14. System nach Anspruch 7 oder 10, wobei das System für die Quersteuerung des Flugzeugs vorgesehen ist, wobei die Befehlsmittel Signale für die Flugzeugquersteuerung erzeugen und die Steuermittel die Steueroberflächen bewegen, um zu bewirken, daß jeder der flexiblen Flügel sich aeroelastisch in eine gewünschte Gesamtkontur auslenkt (verformt) um die Quersteuerung des Flugzeugs zu bewirken.

15. System nach Anspruch 7 oder 10, wobei das System die Querund Neigungssteuerung des Flugzeugs vorsieht, die Befehlsmittel Signale für die Flugzeug Quer- und Neigungssteuerung erzeugen, und die Steuermittel die Steueroberflächen bewegen, um jeden der flexiblen Flügel zu veranlassen, sich aeroelastisch auszulenken und zwar in eine gewünschte Gesamtkontur zur Bewirkung der Quer- und Neigungssteuerung des Flugzeugs.

16. System nach Anspruch 7 oder 10, wobei die Befehlsmittel Signale erzeugen für die Flugzeugquer-, Neigungs- und Giersteuerung, und wobei die Steuermittel die Steueroberflächen bewegen, um zu bewirken daß jeder der flexiblen Flügel sich aeroelastisch verformt (auslenkt) in die gewünschte Gesamtkontur, um die Quer- Neigungs- und Giersteuerung des Flugzeugs zu bewirken.

17. System nach Anspruch 10, wobei die Flugzeugfühler die Machzahl, die Flugzeuglage und die Höhe abfühlen.

18. System nach Anspruch 10 mit Flügelfühlern (Sensoren) zum Vorsehen von Signalen, welche die Bewegung der Flügel anzeigen, und wobei die Verarbeitungsmittel auch auf die Signale von den Flügelsensoren ansprechen.

19. System nach Anspruch 18, wobei die Steuermittel auch die Steueroberflächen bewegen, um zu bewirken, daß die flexiblen Flügel sich aeroelastisch in einer gewünschten Art und Weise auslenken, um eine (Wind)Stoßbelastungsminderung vorzusehern.

20. System nach Anspruch 18, wobei die Steuermittel die Steueroberflächen auch bewegen, um zu bewirken, daß die flexiblen Flügel sich aeroelastisch in einer gewünschten Art und Weise auslenken, um eine Flatterunterdrückung vorzusehen.

21. System nach Anspruch 18, wobei die Steuermittel die Steueroberflächen auch bewegen, um die flexiblen Flügel zu einer aeroelastischen Verformung oder Auslenkung in einer gewünschten Art und Weise zu veranlassen, um eine (Wind) Stoßbelastungsverringerung und Flatterunterdrückung vorzusehen.

22. System nach Anspruch 18, wobei die Steuermittel auch die Steueroberflächen bewegen, um die flexiblen Flügel zu einem aeroelastischen Auslenken in der gewünschten Art und Weise zu veranlassen, um eine Manöverlaststeuerung vorzusehen.

23. System nach Anspruch 18, wobei die Steuermittel die Steueroberflächen auch bewegen, um zu bewirken, daß die flexiblen Flügel sich aeroelastisch in einer gewünschten Art und Weise auslenken, um (Wind) Stoßlastverminderung, Flatterunterdrückung und Manöverlaststeuerung vorzusehen.

24. System nach Anspruch 1 oder 2, wobei die Verarbeitungsmittel eine Kompensation vorsehen für geschädigte oder nicht arbeitende Steueroberflächen, die nicht in der Lage sind, die Flügel zu veranlassen, in einer gewünschten Art und Weise sich auszulenken oder zu verformen.

25. System nach Anspruch 7, 8 oder 9, wobei das Flugzeug keinen Vertikalschwanz aufweist.

26. Verfahren zum aktiven Steuern eines Flugzeugs mit flexiblen Flügeln und Flugsteueroberflächen, angeordnet an den flexiblen Flügeln, wobei das Abfühlen der Bewegung des Flugzeugs vorgesehen ist und die Bewegung der Steueroberflächen an den Flügeln infolge der abgefühlten Bewegung des Flugzeugs zur Steuerung des Flugzeugs, gekennzeichnet durch die Bewegung der Steueroberflächen des Flugzeugs derart, daß die Steueroberflächen in aeroelastischer Weise Fügelauslenkungen bewirken, um die gewünschten Gesamtkonturer für jeden der Flügel zu erhalten, um die gewünschte Steuerung des Flugzeugs zu bewirken.

27. Verfahren nach Anspruch 26, wobei die Bewegung der Steueroberflächen in einer Art und Weise erfolgt zur aeroelastischen Auslenkung der Flügel, zur Bewirkung der gewünschten Flugzeugsteuerung mit einem im wesentlichen minimalen Widerstand.

28. Verfahren nach Anspruch 27, wobei die Erzeugung von Befehlssignalen für die Flugzeugflugsteuerung vorgesehen ist, wobei die Bewegung der Steueroberflächen ebenfalls in Folge der Befehlssignale geschieht.

## Revendications

1. Ensemble de contrôle actif d'un aéronef ayant des ailes flexibles, des gouvernes de vol montées sur les ailes flexibles, des capteurs d'aéronef destinés à transmettre des signaux représentatifs du mouvement de l'aéronef, un dispositif de traitement commandé par les signaux des capteurs et destiné à créer des signaux de contrôle, et un dispositif de commande recevant les signaux de contrôle du dispositif de traitement et destiné à déplacer les gouvernes en fonction des signaux de contrôle d'une manière telle que l'aéronef est contrôlé, caractérisé en ce que le dispositif de commande crée des signaux de contrôle de déplacement des gouvernes qui provoquent aéroélastiquement les fléchissements voulus des ailes, et le dispositif de commande déplace les gouvernes de manière que les gouvernes provoquent aéroélastiquement les fléchissements d'ailes donnant des profils globaux voulus pour chacune des ailes, et assurent le contrôle voulu de l'aéronef,

2. Ensemble selon la revendication 1, comprenant aussi un dispositif de commande créant des signaux de contrôle de vol de l'aéronef, et le dispositif de commande est commandé par ces signaux provenant du dispositif de commande.

3. Ensemble selon la revendication 1 ou 2, dans lequel le dispositif de commande déplace les gouvernes de manière que chacune des ailes fléchissent aéroélastiquement en prenant le profil général voulu assurant le maintien de la stabilité de l'aéronef.

4. Ensemble selon la revendication 1, dans lequel une gouverne au moins est montée sur les bords d'attaque et de fuite des ailes.

5. Ensemble selon la revendication 4, dans lequel les gouvernes sont montées afin qu'elles présentent un fléchissement au-dessus et au-dessous de l'aile sur laquelle elles sont montées.

6. Ensemble selon la revendication 2, dans lequel l'ensemble est destiné à fonctionner dans des conditions d'inversion classique d'ailerons.

7. Ensemble selon la revendication 6, dans lequel les bords d'attaque et de fuite des ailes ont au moins une gouverne montée sur eux, et les gouvernes sont montées afin qu'elles présentent un fléchissement au-dessus et au-dessous de l'aile sur laquelle elles sont montées.

8. Ensemble selon l'une quelconque des revendications 1 à 7, dans lequel l'aéronef n'a pas de queue horizontale.

9. Ensemble selon la revendication 7, dans lequel l'aéronef n'a pas de queue horizontale et le dispositif de commande a des gouvernes qui provoquent le fléchissement aéroélastique des ailes flexibles de manière que le roulis de l'aéronef soit contrôlé.

10. Ensemble selon la revendication 1 ou 7, dans lequel les signaux de contrôle sont tels que le dispositif de commande déplace les gouvernes de manière que les ailes fléchissent aéroélastiquement, si bien que le contrôle voulu de l'aéronef est réalisé avec une traînée pratiquement minimale.

11. Ensemble selon la revendication 1, dans lequel les ailes sont formées d'une matériau composite et sont adaptées de manière pratiquement aéroélastique afin que leur aptitude à fléchir à différentes configurations qui peuvent être souhaitables pour les performances de l'aéronef soit améliorée dans tout le régime de vol de l'aéronef.

12. Ensemble selon la revendication 1 ou 9, dans lequel le dispositif de commande est aussi destiné à déplacer les gouvernes de manière que les ailes fléchissent aéroélastiquement en prenant une configuration pratiquement optimisée pour les conditions de vol. 13. Ensemble selon la revendication 10, dans lequel l'aéronef a un fuselage, le fuselage est monté sur les ailes, et comprenant en outre des gouvernes de vol du fuselage, et un dispositif de commande, les gouvernes du fuselage étant montées sur le fuselage, le dispositif de traitement créant aussi des seconds signaux de contrôle, le second dispositif de commande étant commandé par les seconds signaux de contrôle et étant destiné à déplacer les gouvernes du fuselage, ces gouvernes du fuselage travaillant en combinaison avec les ailes pour le contrôle de l'aéronef, les seconds signaux de contrôle étant tels que, en combinaison avec les premiers signaux de contrôle, ils assurent le contrôle de l'aéronef avec une traînée sensiblement minimale.

14. Ensemble selon la revendication 7 ou 10, qui est destiné à régler le roulis de l'aéronef, le dispositif de commande crée des signaux de réglage du roulis de l'aéronef, et le dispositif de commande déplace les gouvernes de manière que chaque aile flexible fléchisse aéroélastiquement en prenant le profil général voulu qui permet le réglage du roulis de l'aéronef.

15. Ensemble selon la revendication 7 ou 10, qui est destiné à assurer le réglage du roulis et du tangage de l'aéronef, le dispositif de commande crée des signaux de réglage de roulis et de tangage de l'aéronef, et le dispositif de commande déplace les gouvernes de manière que chacune des ailes flexibles fléchisse aéroélastiquement en prenant le profil global voulu qui assure le réglage du roulis et du tangage de l'aéronef.

16. Ensemble selon la revendication 7 ou 10, dans lequel le dispositif de commande crée les signaux de réglage de roulis, de tangage et de lacet de l'aéronef, et le dispositif de commande déplace les gouvernes de manière que chaque aile flexible fléchisse aéroélastiquement en prenant le profil général voulu qui assure le réglage de roulis, de tangage et de lacet de l'aéronef.

17. Ensemble selon la revendication 10, dans lequel les capteurs de l'aéronef détectent le nombre de Mach, l'attitude de l'aéronef et l'altitude.

18. Ensemble selon la revendication 10, comprenant en outre des capteurs d'ailes destinés à donner des signaux représentatifs du mouvement des ailes, et le dispositif de traitement est aussi commandé par les signaux des capteurs d'ailes.

19. Ensemble selon la revendication 18, dans lequel le dispositif de commande déplace aussi les gouvernes de manière que les ailes flexibles fléchissent aéroélastiquement de la manière voulue en compensant les forces dues aux rafales.

20. Ensemble selon la revendication 18, dans lequel le dispositif de commande déplace aussi les gouvernes de manière que les ailes flexibles fléchissent aéroélastiquement de la manière qui convient à la suppression du flottement.

21. Ensemble selon la revendication 18, dans lequel le dispositif de commande déplace aussi les gouvernes de manière que les ailes flexibles fléchissent aéroélastiquement de la manière voulue en assurant la compensation des forces dues aux rafales et la suppression du flottement.

22. Ensemble selon la revendication 18, dans lequel le dispositif de commande déplace aussi les gouvernes de manière que les ailes flexibles fléchissent aéroélastiquement de la manière voulue pour assurer la compensation des forces dues aux manoeuvres.

23. Ensemble selon la revendication 18, dans lequel le dispositif de commande déplace aussi les gouvernes de manière que les ailes flexibles fléchissent aéroélastiquement de manière voulue, en assurant la compensation des forces dues aux rafales, la suppression du flottement et la compensation des forces dues aux manoeuvres.

24. Ensemble selon la revendication 1 ou 2, dans lequel le dispositif de traitement compense l'effet des gouvernes détériorées et inopérantes qui sont en panne de manière que les ailes fléchissent de la manière voulue.

25. Ensemble selon la revendication 7, 8 ou 9, dans lequel l'aéronef n'a pas de queue verticale.

26. Procédé de contrôle actif d'un aéronef ayant des ailes flexibles et des gouvernes montées sur les ailes flexibles, le procédé comprenant la détection du mouvement de l'aéronef et le déplacement des gouvernes des ailes en fonction du mouvement détecté de l'aéronef afin que celui-ci soit contrôlé, caractérisé par le déplacement des gouvernes de l'aéronef de manière que les gouvernes assurent aéroélastiquement les fléchissements des ailes afin que chaque aile prenne le profil global voulu pour assurer le contrôle voulu de l'aéronef.

27. Procédé selon la revendication 26, dans lequel e déplacement des gouvernes est réalisé de manière que les ailes fléchissent aéroélastiquement et assurent le contrôle voulu de l'aéronef avec une traînée minimale pratiquement.

28. Procédé selon la revendication 27, comprenant aussi la création de signaux de contrôle de vol de l'aéronef, et le déplacement des gouvernes est aussi réalisé en fonction des signaux de contrôle.

FIG. 1

FIG. 2

SENSORS `46`

AIRCRAFT `10`

COMPUTER

**FUNCTIONS** `50`

SUMMING
SHAPING
FILTERING
SWITCHING
GAIN SCHEDULING
LIMITING
CONDITIONING
CONVERSION
COMPUTATION

PILOT
COMMAND `48`

RT. INBD
L.E. FLAP `20`

RT. OUTBD
L.E. FLAP `18`

LFT. INBD
L.E. FLAP `28`

LFT. OUTBD
L.E. FLAP `29`

RT. INBD
T.E. FLAP `24`

RT. OUTBD
T.E. FLAP `22`

LFT. INBD
T.E. FLAP `32`

LFT OUTBD
T. E. FLAP `30`

RT. BODY
FLAP `34`

LFT. BODY
FLAP `36`

*FIG. 3*

13

FIG. 4

FIG. 5

FIG. 6

FIG. 7

17

156
OVERALL SENSORS

202
VERTICAL FUSELAGE SENSORS

204
WING SENSORS

10
AIRCRAFT

48
PILOT COMMAND

COMPUTER 200

FUNCTIONS
SUMMING
SHAPING
FILTERING
SWITCHING
GAIN SCHEDULING
LIMITING
CONDITIONING
CONVERSION
COMPUTATION

20 RT. INBD L.E. FLAP
18 RT. OUTBD L.E. FLAP
28 LFT. INBD L.E. FLAP
29 LFT. OUTBD L.E. FLAP
24 RT. INBD T.E. FLAP
22 RT. OUTBD T.E. FLAP
32 LFT. INBD T.E. FLAP
30 LFT. OUTBD T.E FLAP
34 RT. BODY FLAP
36 LFT. BODY FLAP

FIG. 8